# EUROPEAN PATENT APPLICATION

(11) **EP 1 106 331 A1**
(43) Date of publication of application: **13.06.2001**
(21) Application number: 00203865.1
(22) Date of filing: 06.11.2000
(51) Int. Cl.: B29C 63/16, A47C 7/18, B68G 7/05

(54) **Mounting apparatus**

(30) Priority: 10.12.1999 SE 9904520
(71) Applicant: KINNARPS AB, 521 88 Kinnarp (SE)
(72) Inventor: Gustavsson, Bo, 568 93 Skillingaryd (SE)
(74) Representative: Wallengren, Yngvar

(57) **Abstract**

An apparatus for mounting a furniture covering on a furniture piece such as a chair seat has an elastic membrane (4) which is secured along its periphery in a frame (3). The membrane (4) carries a spread-out, cut-to-shape piece of covering material (6) and above this the furniture piece. Further, the apparatus has a chamber-forming member which realises a substantially closed chamber on the upper side of the membrane (4) as well as the periphery of the furniture piece, and an edge region inside this periphery. Fixing devices positionally fix the furniture piece in the chamber. Moreover, means are provided for realising a pressure difference over the membrane (4). The chamber is located on the low pressure side of the membrane (4).

## Description

### TECHNICAL FIELD

The present invention relates to an apparatus for mounting a covering on a furniture piece such as a chair seat.

### BACKGROUND ART

In the manufacture, for example, of a chair within the furniture industry, it occurs commonly that the seat of the chair and its back support panel are produced as separate components. Such a component has a configurationally stable frame or body which may consist of injection moulded plastic, compression moulded plywood or the like, and which on its one side is provided with a foamed plastic layer. The foamed plastic layer is then surrounded by a furniture covering such as textile, leather or similar material, which is stretched over the foamed plastic layer, folded over its edges and the frame or body of the furniture and then secured on the rear side of the frame.

When securing the furniture covering to the rear side of the frame, several different techniques may be employed, of which one technique implies that piping is provided along the edge of the covering, a string being passed interiorly in the piping and then tightened taut on the rear side of the frame, being thereafter anchored in place by means of a staple gun.

Methods of securing a furniture covering also occur using furniture tacks or securement on the rear side of the frame, in which event the covering must be stretched manually at the same time as being positionally fixed. Such a manual stretching and fixing of the furniture covering is both time-consuming and fatiguing and involves such risks as the covering will be stretched unevenly depending upon the person carrying out the work.

Constructions have also occurred in the art in which the furniture covering is glued to the rear side of the frame, the gluing possibly being combined with furniture tacks/upholstery drawing pins.

If only gluing is to be employed, this generally requires the work of several people, since the covering must be both stretched and held in place along the entire periphery of the frame, at least during the time it takes for the glue to set.

### PROBLEM STRUCTURE

The present invention has for its object to design the mounting apparatus intimated by way of introduction such that this, in a rapid and efficient manner, both covers the furniture covering, folds it around the edge of the furniture piece and holds it fixed against the rear side of the furniture piece during the time it takes for a glue to set firmly.

### SOLUTION

The objects forming the basis of the present invention will be attained if the mounting apparatus intimated by way of introduction is characterised by an elastic membrane secured in a frame along its periphery, the membrane being disposed for supporting a spread-out, cut-to-shape piece of furniture covering, and a chamber-forming member above the furniture piece for realising a substantially closed chamber on the upper side of the membrane in the region of and around the periphery of the furniture piece, and at least in over an edge region inside the periphery, fixing devices for positionally fixing the furniture piece in the chamber, and means for realising a pressure difference over the membrane, the chamber being disposed on the low pressure side of the membrane.

### BRIEF DESCRIPTION OF THE ACCOMPANYING DRAWINGS

The present invention will now be described in greater detail hereinbelow, with particular reference to the accompanying Drawings. In the accompanying Drawings:
- Fig. 1: is a perspective view of the two main components which are included in the apparatus according to the present invention;
- Fig. 2: is a partial cross section taken along the section marking A-A in Fig. 1 in a starting position for mounting a furniture covering on a furniture piece;
- Fig. 3: is a section corresponding to that of Fig. 2, the mounting process having just commenced;
- Fig. 4: is a section corresponding to those of Figs. 2 and 3, the mounting process having proceeded so far that the covering material now abuts against the peripheral edge of the furniture piece; and
- Fig. 5: is a section corresponding to those of Figs. 1-4, the mounting process now having been completed.

### DESCRIPTION OF PREFERRED EMBODIMENT

The Drawings show only such components as are employed directly for mounting the furniture covering. Thus, the frame which supports the above-mentioned components, guides and drive means for their movements, etc., have been omitted from the Drawings.

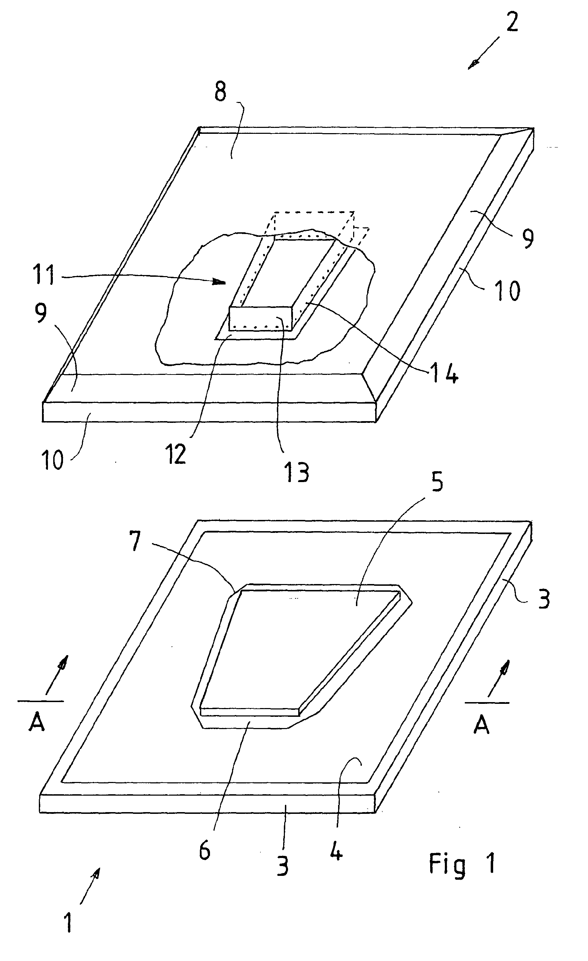

Fig. 1 shows in perspective the two most important main components in the apparatus according to the present invention. Thus, it is apparent from the Figure that the apparatus according to the present invention comprises a lower member 1 and an upper member 2, which are movable in relation to one another in the vertical direction from the open position illustrated in the Figure to a closed position where the upper member rests on the lower member. In such instance, the lower member 1 and the upper member 2 are, as regards configuration and size, such that they substantially entirely cover one another in the closed position.

The lower member 1 includes a peripheral frame 3 which, in the illustrated embodiment, is substantially rectangular but which may also be round, oval or have any other suitable shape. The frame 3 consists, in the illustrated embodiment, of a welded construction produced from a square profile which, thereby, will be of considerable mechanical strength. An elastic membrane 4 is secured along the upper side of the frame and sealingly cooperates with the frame 3 along its periphery. The membrane 4 preferably consists of a rubber sheet produced from natural rubber and wholly lacks reinforcement, with the result that it is extremely tensile in principle to the same degree in all directions. This flexibility is at least 4-5 times linearly before rupture occurs. The membrane 4 is taut in the frame 3 so much that it can, without appreciable flexural depression, support a piece of furniture covering material and a furniture piece 5 recumbent thereon.

In the illustrated embodiment, the furniture piece 5 is exemplified by a chair seat which may consist of an injection moulded body portion which, in its underside in the Figure (its upper side in the position of use of the chair seat on the chair), has a fixedly glued foamed plastic layer. It will also be apparent from Fig. 1 that the furniture piece 5 lies on the upper side of a piece of furniture covering material 6 which in turn rests direct on the membrane 4.

The piece of covering material 6 has been cut-to-shape in order to fit the configuration and size of the furniture piece 5. It will be particularly apparent from the Drawing that the covering material extends outside the outer edge of the furniture piece 5 with a strip whose width, on the one hand, corresponds to the vertical extent of the furniture piece and, on the other hand, to the width of the covering material which is to be glued in place on the rear side, in Fig. 1 the upwardly facing side of the furniture piece 5. It is also apparent that the corner portions 7 of the covering material 6 have been cut away in order to avoid wrinkles and folds when the covering material is folded round the edge region of the furniture piece and secured on its rear side.

On the underside of the frame 3, the frame has a cover plate so that there is formed a substantially closed chamber where the membrane 4 constitutes a defining wall, in the illustrated embodiment an upper defining wall. The closed space in the frame 3 may be placed in communication with a source of a pressurised medium, for example compressed air. In order to withstand the powerful forces which apply because of the size of the frame 3, the cover plate on the underside of the frame is naturally strengthened with the aid of reinforcing profile elements.

The upper member 2 fulfils the function of a chamber-forming device which is in the form of a downwardly open hood. The hood has an upper wall 8, side walls 9 and a frame 10 disposed around the lower edges of the side walls 9. The hood ahs completely tight joints which are suitably produced by welding, whereby the hood is in principle airtight. The frame 10 of the hood is of the same size and shape as the frame 3 of the lower member, for which reason they cover one another when they are brought together to a closed position by relative displacement in the vertical direction of the lower member 1 and the upper member 2.

When the lower member 1 and the upper member 2 have been brought together, the hood forms a closed space on the upper side of the membrane 4. The height of this closed space is such that a space is retained between the upper side of the furniture piece 5 and the inside of the upper wall 8 of the hood. In a practical embodiment, this distance may amount to 5-10 cm.

For sealing between the -lower member and the upper member in the closed position, sealing means are provided which are disposed on the mutually facing sides of one or both of the frames 3 and 10, respectively.

The hood has a connection which places its interior in communication with the atmosphere or with a source of partial vacuum.

Interiorly in the hood, fixing devices are provided whose purpose is to positionally fix the furniture piece 5 in the vertical direction in relation to the upper side 8 of the hood when a pressure difference is created over the membrane 4 in such a direction that the space interiorly in the hood becomes the low pressure side of the membrane. This pressure difference can be realised either by the supply of compressed air to the space under the membrane 4, in which event the interior of the hood may be placed in communication with the atmosphere, or in that the interior of the hood is placed in communication with a source of partial vacuum so that the membrane 4 is thereby sucked up in the hood. Finally, the membrane 4 may be exposed to excess pressure on its under side like partial vacuum on its upper side.

In the described example where the furniture piece 5 has a body portion produced from the injection moulding of plastic, the force acting on the furniture piece 5, when a pressure difference prevails over the membrane 4, will be so great that substantially all of the upper side of the furniture piece 5 must be supported in order that the furniture piece is not broken apart. In this embodiment, the fixing device 11 therefore includes a dolly or abutment member 12 in the form of a metal plate which follows as closely as possible the configuration of the upper side of the furniture piece 5. The abutment member 12 is smaller than the upper side of the furniture piece 5 and leaves an edge region of the furniture piece free, and this edge region is to be employed for fixedly gluing the furniture covering material.

The fixing device 11 further includes a spacer which holds the abutment member 12 in the correct position in relation to the upper wall 8 of the hood. In a practical embodiment, this spacer consists of a wall 13 which connects the upper side of the abutment member 12 with the lower side of the upper wall 8 of the hood. The wall 13 has been formed in such a manner that it leaves an edge portion of the abutment member 12 free for reasons which will be set out below. Further, the wall 13 has, at its lower edge, a number of apertures 14 via which air may flow from the interior of the hood to the region inside the wall 13. This region inside the wall 13 is connectable either to the atmosphere or to a source of partial vacuum.

The abutment member 12 may also be provided with through-going apertures so that a gas communication may be obtained between the region inside the wall 13 and the inner region in the rest of the hood and, in particular, the region between the body portion and the abutment member.

The apparatus according to the present invention further includes a device (not shown on the Drawings) for applying a hotmelt glue on the upper side of the furniture piece 5 and, more precisely, along a strip-shaped edge portion throughout the entire periphery of the furniture piece. Possibly, glue may also be sprayed on the side edges of the furniture piece as well as on that part of the covering material which is not covered by the furniture piece.

In one practical embodiment, the frames 3 and 10 may have lateral dimensions of the order of magnitude of 80 cm so that the membrane 4 has a free region not covered by the furniture piece between the periphery of the furniture piece and the inside of the frame 3 of at least one or a few decimetres.

The dimensioning of the two frames 3 and 10 however implies also that a very powerful force is generated which strives to force the upper member 2 away from the lower member 1 when the underside of the membrane 4 is exposed to excess pressure at the same time as the upper member 2 is placed in communication with the atmosphere. In order to prevent such separation between the lower member 1 and the upper member 2, the lower member and the upper member are interconnectable by means of mechanical coupling devices which are placed along the periphery of the two frames 3 and 10.

If the interior of the upper member 2 is instead connected to a source of partial vacuum, the above-mentioned forces may be reduced. If, thus, the interior of the upper member is evacuated to a partial vacuum of for instance 300-600 millibar, the excess pressure on the underside of the membrane 4 can be reduced correspondingly while maintaining pressure difference and outward bulging of the membrane upwardly caused by the pressure difference. On the other hand, the force which strives to separate the upper member 2 and the lower member 1 is reduced to a degree corresponding to the reduction of the excess pressure on the underside of the membrane 4.

When the apparatus according to the present invention is reduced into practice, a piece of furniture covering material 6 is placed on the upper side 4 of the membrane and positioned in accordance with a marking on the membrane. Thereafter, the furniture piece 5 is placed above the furniture covering material with the rear side upwards and the side provided with foamed plastic facing downwards direct against the covering material. Thereafter, the glue is applied on the furniture piece and possibly also on the projecting edge portion of the covering material 6, whereafter the lower member 1 and the upper member 2 are brought together and locked together mechanically. In this position, the upper member is connected to a source of partial vacuum, the membrane 4 being sucked upwards into the closed space formed by the upper member 2. On the other hand, as a result of its cooperation with the fixing device 11, the furniture piece 5 is prevented from being lifted by the membrane 4. This implies that the free region of the membrane between the periphery of the furniture piece 5 and the inside of the frame 3 is bent upwards. The material which, in this instance, bubbles upwards in the membrane is drawn out uniformly from the entire surface of the membrane, which entails that also that part of the membrane which is covered by the furniture covering material 6 and the furniture piece 5 is flexed in principle radially outwards from a form of centre point somewhere in the middle of the membrane 4. This stretching of the membrane realises, by frictional action against the underside of the covering material 6, also a stretching of the covering material so that wrinkles and unevenesses in the covering material are eradicated.

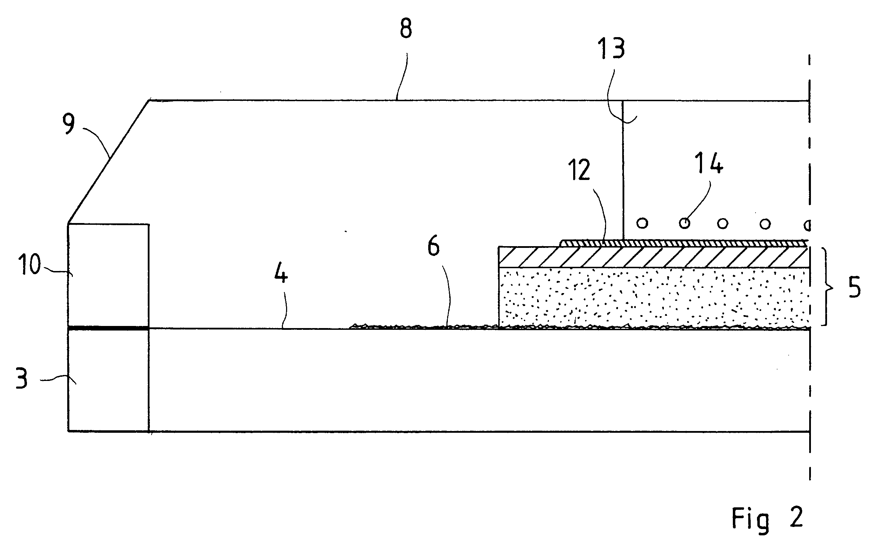

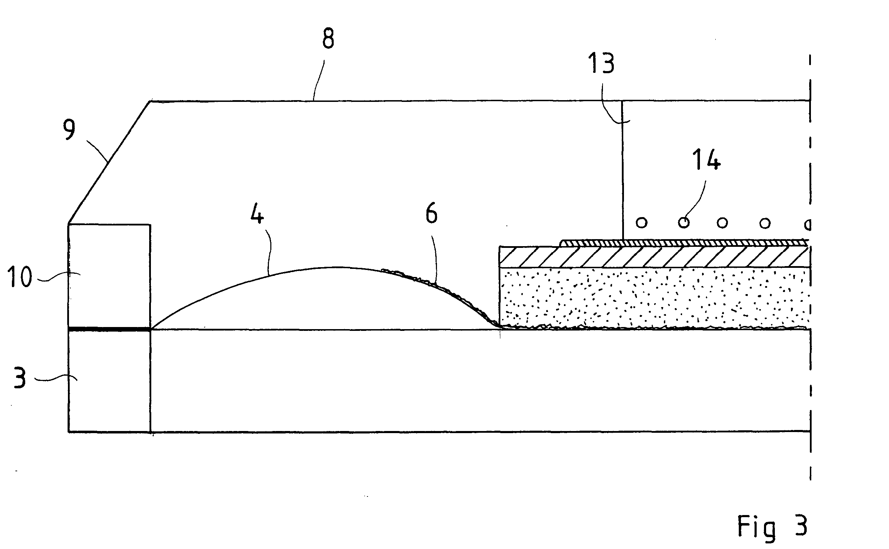

Figs. 2-5 show vertical partial sections taken along the section marking A-A in Fig. 1.

In such instance, Fig. 2 shows a state where the furniture piece 5 lies on the membrane 4 with the furniture covering material 6 placed between the membrane and the underside of the furniture piece 5. The upper member 2 is located on the lower member 1 and it is assumed that the mechanical interconnection and sealing of the members is established between the two frames 3 and 10. In Fig. 2, there is no pressure difference over the membrane 4.

When the mounting process proper is commenced, a pressure difference has been established over the membrane 4, which, between the periphery of the furniture piece 5 and the inside of the two frames 3 and 10, bulges upwards. The upwardly bulging region of the membrane 4 entails that the membrane has been flexed from a centre point somewhere centrally beneath the furniture piece 5, for which reason the furniture covering material is also stretched between the membrane and the underside of the furniture piece 5.

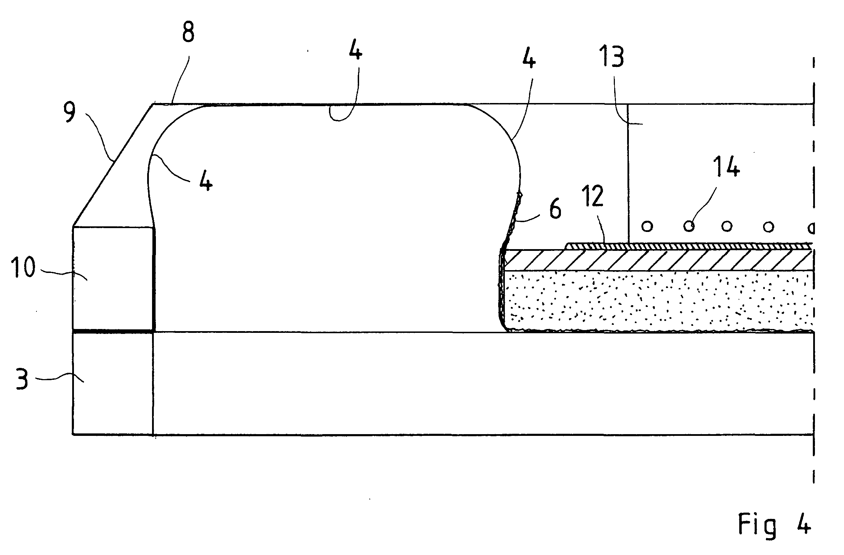

In Fig. 4, the space under the membrane 4 has been placed under excess pressure so that the upward bulging of the membrane 4 is greatly amplified. It is apparent from the Figure that the membrane 4 abuts with a considerable portion against the inside of the upper wall 8 of the upper member 2. It will further be clearly apparent that the membrane 4 urges an edge portion of the covering material 6 against the side edge of the furniture piece 5 so that a glue union along mutually bordering surfaces begins to be established. It will further be apparent that the membrane 4 begins to bulge into the space which is formed between the upper side of the furniture piece 5, the upper side of the abutment member 12 and the underside of the upper wall 8 of the upper member 2.

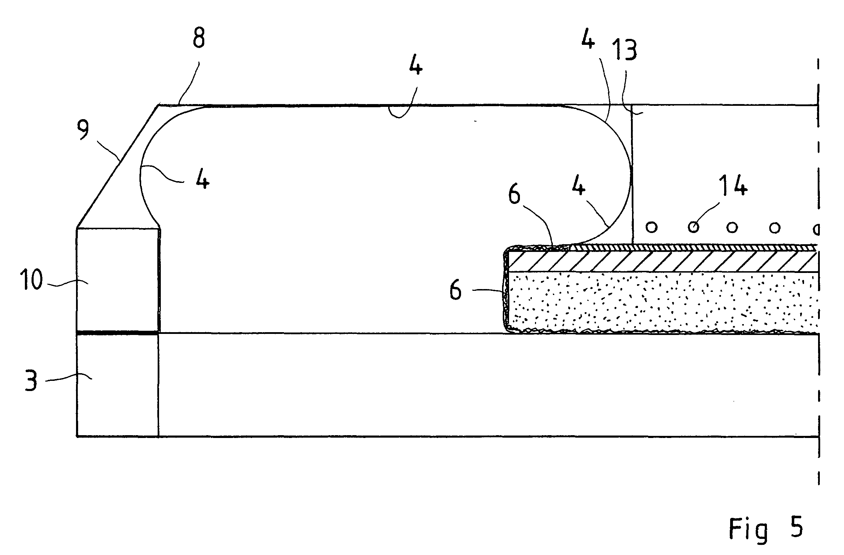

In Fig. 5, the mounting and gluing in place of the furniture covering material 6 may be considered as completed. In this state, the pressure difference over the membrane 4 has reached its peak and it will be apparent that the membrane abuts with a considerable surface against the inside of the upper wall 8 of the upper member 2. Further, the membrane 2 has, to a great extent, bulged into the region which is formed between the outside of the wall 13, the inside of the upper wall 8 and the upper side of the furniture piece 5 and the abutment member 12. In this position, the membrane presses the edge portion of the covering material 6 against the glued edge portion of the rear side of the furniture piece 5. The pressure difference over the membrane 4 is maintained so long that the glue union between the furniture piece and the covering material is reliably established. With a hotmelt glue of suitable quality, this implies in practice a time interval of the order of magnitude of half a minute.

When the glue union between the covering material and the furniture piece has been established, the interior of the upper member is placed in communication with the atmosphere, which also applies to the closed region under the membrane 4. Hereby, the membrane 4 will return to the substantially planar form illustrated in Fig. 2, whereafter the upper member 2 and the lower member 1 are separated and the finished furniture seat is removed.

In order to speed up the opening process, it is possible to connect an excess pressure to the interior space in the upper member 2 at the same time as the space under the membrane 4 is connected to a source of partial vacuum.

### DESCRIPTION OF ALTERNATIVE EMBODIMENTS

In the foregoing description, the furniture piece has been shown and described as a substantially planar panel with a foamed plastic upholstery on its upper side. If, for example, the furniture piece is instead a back support panel for a chair, this is often arched, with more or less complicated configuration. If, for example, the furniture piece has a predominant arching around an axis of curvature, it is possible to form the two frames 3 and 10 with a curve which corresponds to the curvature of the furniture piece. Hereby, it need not be feared that there is left a large space in the vertical direction between the furniture covering material resting on the membrane and the underside of the furniture piece when this placed in the mounting apparatus. Such a large interspace could namely entail some uncertainty regarding the final and correct position of the furniture covering material in relation to the furniture piece.

In such cases where the furniture piece has a configurationally stable body, as is, for example the case when the body consists of compression moulded plywood, the body need not be supported over the greater part of its surface by the abutment member 12 formed as a support plate. Instead, the downwardly facing edge of the wall 13 may be formed in such a manner that this edge can abut direct against the rear side of the furniture piece 5.

Alternatively, it could also be conceivable to dispense with the wall 13 entirely and the abutment member 12 formed as a plate, and replace these components with a number of support pins or the like extending downwards from the upper wall 8 of the upper member 2.

The present invention should not be considered as restricted to that described above and shown on the Drawings, many modifications being conceivable without departing from the scope of the appended Claims.

## Claims

1. An apparatus for mounting a covering on a furniture piece such as a chair seat, **characterised by** an elastic membrane (4) secured in a frame (3) along its periphery, the membrane being disposed for supporting a spread-out, cut-to-shape piece of furniture covering material (6), and a chamber-forming member (2) above the furniture piece (5) for realising a substantially closed chamber on the upper side of the membrane (4) in the region of and around the periphery of the furniture piece (5), and at least in over an edge region inside the periphery, fixing devices (11) for positionally fixing the furniture piece (5) in the chamber, and means for realising a pressure difference over the membrane (4), the chamber being disposed on the low pressure side of the membrane.

2. The apparatus as claimed in Claim 1, **characterised in that** the chamber-forming member (2) is in the form of a downwardly open hood with a circumferential edge portion which may be applied against the frame (3) for realising sealing cooperation with the frame with the aid of a sealing device.

3. The apparatus as claimed in Claim 2, **characterised in that** the fixing devices (11) include an abutment device (12) connected with the underside/inside of the hood and which, when the pressure difference over the membrane (4) prevails, is disposed to hold the furniture piece (5) at a predetermined vertical position in relation to the top (8) of the hood.

4. The apparatus as claimed in Claim 3, **characterised in that** the abutment member (12) is designed to follow the upper side of the furniture piece (5) and to leave a peripheral edge region thereof free.

5. The apparatus as claimed in Claim 3 or 4, **characterised** in **that** the fixing devices include a wall (13) which extends from the region of the upper side of the furniture piece (5) to the inside of the top (8) of the hood and which is located a distance inside the periphery of the furniture piece.

6. The apparatus as claimed in any of Claims 1 to 5, **characterised in that** the membrane (4) is disposed to form a wall in a closed space which may be connected to a source of excess pressure.

7. The apparatus as claimed in any of Claims 1 to 6, **characterised in that** the closed chamber may be placed in communication with the atmosphere or a source of partial vacuum.

8. The apparatus as claimed in any of Claims 4 to 7, **characterised in that** the abutment member (12) is in the form of a plate with at least one aperture whose side facing away from the furniture piece (5) may be placed in communication with the atmosphere or a source of partial vacuum.

9. The apparatus as claimed in any of Claims 5 to 8, **characterised in that** the region inside the wall (13) is closed and communicable with the atmosphere or a source of partial vacuum; and that the wall, at its lower edge, has a number of apertures (14).

10. The apparatus as claimed in any of Claims 1 to 9, **characterised in that** the frame (3) and the chamber-forming member (2) are mutually movable in the vertical direction and have means for mechanical interconnection in a position where they abut against one another.

11. The apparatus as claimed in any of Claims 1 to 10, **characterised by** means for the supply of a glue on a peripheral edge portion of the upper side of the furniture piece (5) and possibly also an edge region of the furniture covering material (6) located outside the edge of the furniture piece.
